Europäisches Patentamt

European Patent Office

Office européen des brevets

(19)

(11) Numéro de publication : **0 107 572**
**B1**

(12) **FASCICULE DE BREVET EUROPÉEN**

(45) Date de publication du fascicule du brevet :
**10.09.86**

(21) Numéro de dépôt : **83401984.6**

(22) Date de dépôt : **12.10.83**

(51) Int. Cl.⁴ : **F 04 B 11/00, F 04 B 23/10,
G 05 B 13/04, F 02 C 7/236**

(54) Dispositif et procédé de détection de la garde à la cavitation d'une pompe volumétrique.

(30) Priorité : 28.10.82 FR 8218053

(43) Date de publication de la demande :
02.05.84 Bulletin 84/18

(45) Mention de la délivrance du brevet :
10.09.86 Bulletin 86/37

(84) Etats contractants désignés :
DE FR GB

(56) Documents cités :
FR-A- 1 282 772
FR-A- 2 170 637
FR-A- 2 320 435
US-A- 3 942 724
US-A- 3 963 378
IBM TECHNICAL DISCLOSURE BULLETIN, vol. 11,
no. 9, février 1969, New York (US) G.D. FATZER et al.:
"Control of processes by process simulator incorporating radiotraces", pages 1143-1144
MESURES, REGULATION. AUTOMATISME, vol. 34,
no. 10, octobre 1969, Paris (FR) P.R. BERNARD:
"Science d'aujourd'hui - technique de demain",
pages 136, 140

(73) Titulaire : SOCIETE NATIONALE D'ETUDE ET DE
CONSTRUCTION DE MOTEURS D'AVIATION,
"S.N.E.C.M.A." ,
2 Boulevard Victor
F-75015 Paris (FR)

(72) Inventeur : Mouton, Pierre Charles
19, rue de la Mare aux Moines
F-91350 Grigny (FR)

(74) Mandataire : Moinat, François
S.N.E.C.M.A. Service des Brevets Boîte Postale 81
F-91003 Evry Cedex (FR)

Jouve, 18, rue St-Denis, 75001 Paris, France

## Description

L'invention concerne un dispositif et un procédé de détection de la garde à la cavitation d'une pompe volumétrique.

Les pompes volumétriques, notamment à carburant, sont sensibles au phénomène de cavitation qui apparaît lorsque les conditions de gavage sont insuffisantes pour éviter une vaporisation locale ou complète du carburant dans la zone d'aspiration de la pompe.

D'une manière générale, il exite une pression de gavage critique Pc nécessaire pour éviter le phénomène de cavitation. Cette pression critique Pc dépend d'une part de facteurs essentiellement liés à la nature du carburant à la température existant à l'entrée de la pompe et d'autre part, à un facteur qui, pour une pompe de technologie donnée, ne dépend que du régime d'entraînement.

Le but de l'invention est de fournir un signal représentatif de l'écart entre la pression de gavage d'une pompe volumétrique rotative et la valeur critique de la pression conduisant à la cavitation.

FR-A 1 282 772 décrit un dispositif de détection qui se déclenche lorsque la pression amont d'une pompe à combustible prend une valeur voisine de celle pour laquelle se produit le phénomène de cavitation. Ce dispositif à plusieurs chambres est monté en dérivation entre deux points de la canalisation d'arrivée de la pompe principale. L'une des chambres contient un soufflet relié à une aspiration à venturi qui est montée sur une canalisation de retour dérivé de la pompe principale. Le déclenchement est obtenu par l'action d'une différence de pressions dans les chambres. L'invention vise à éviter divers inconvénients liés à l'utilisation de soufflets.

Ce but est atteint par un dispositif caractérisé en ce que le venturi est du type à cavitation, débitant sur un niveau de pression faible et est associé à un générateur de débit proportionnel au débit de la pompe volumétrique, les caractéristiques du générateur de débit et du venturi étant prédéterminées en fonction des caractéristiques de la pompe volumétrique pour que le venturi atteigne son régime de cavitation avant la cavitation de la pompe volumétrique et que, à ce régime, la pression à l'entrée du convergent du venturi soit égale à la pression de gavage critique de la pompe volumétrique, le dispositif comportant en outre un moyen détecteur de la différence entre la pression d'alimentation de la pompe volumétrique et la pression d'entrée du venturi.

En effet, il a été découvert selon l'invention que, dans un circuit du type précisé, il était possible de déterminer les caractéristiques de la machine volumétrique et du venturi de manière à obtenir en amont du venturi une pression représentative de la pression de gavage critique.

Avantageusement, le générateur de débit est une machine volumétrique entraînée de façon proportionnelle à l'entraînement de la pompe volumétrique.

Avantageusement, la pompe volumétrique est alimentée par une pompe de gavage et le venturi débite sur la sortie de l'inducteur de ladite pompe de gavage.

Avantageusement, le venturi est à col de section réglable, ce qui permet d'assurer la régulation du régime de cavitation de la pompe.

L'invention concerne également un procédé de détection de la garde à la cavitation d'une pompe volumétrique, consistant en ce qu'on dérive de l'alimentation de la pompe volumétrique un débit proportionnel au débit de ladite pompe sur un venturi à cavitation débitant sur un niveau de pression faible, en réglant ledit débit proportionnel et la cavitation du venturi pour que celui-ci atteigne son régime de cavitation avant la cavitation de la pompe volumétrique et que, à ce régime, la pression à l'entrée du convergent du venturi soit égale à la pression de gavage critique de la pompe volumétrique, et en ce qu'on détecte la différence entre la pression d'alimentation de la pompe volumétrique et la pression d'entrée du venturi.

Il sera observé que l'invention se distingue de dispositifs anti-cavitation connus par exemple par les documents FR-A 2 268 956 et FR-2 343 138 en ce qu'elle propose avant tout un système de surveillance de la cavitation.

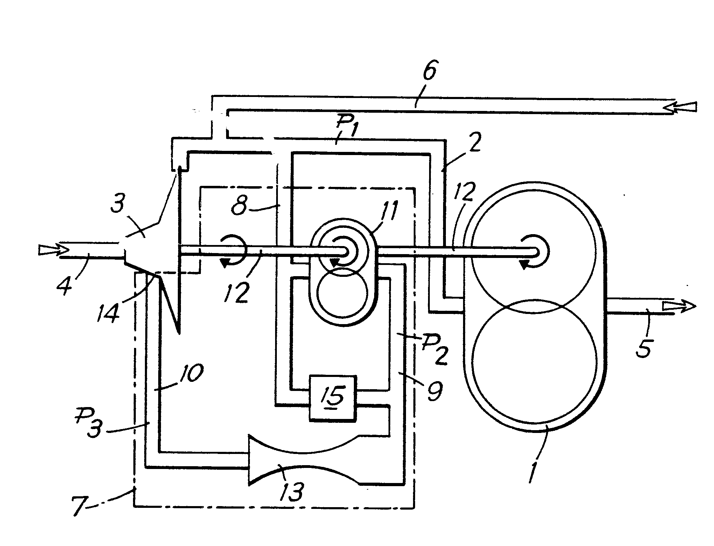

L'invention sera mieux comprise grâce à la description qui va suivre d'un mode préféré de réalisation du dispositif de l'invention, en référence à la figure unique annexée qui représente schématiquement un montage hydraulique équipé du dispositif de l'invention.

La pompe volumétrique 1 à surveiller est alimentée au travers d'une conduite 2 par une pompe de gavage 3 elle-même reliée par conduite 4 à une source d'alimentation non représentée.

La pompe 1 refoule un fluide sous haute pression dans la conduite du refoulement 5, tandis qu'un retour de soupape est prévu sur la conduite 2 au travers de la conduite de retour 6.

Le dispositif de l'invention 7 dont l'ensemble est schématiquement circonscrit par le tracé en traits mixtes, comporte une conduite de dérivation 8-9-10 branchée sur la conduite 2 d'alimentation de la pompe volumétrique 1.

On trouve sur la dérivation 8-9-10, un générateur de débit 11 sous forme d'une machine volumétrique (telle que pompe à engrenages, à piston, à palettes, ...) dont le débit est proportionnel au débit de la pompe volumétrique 1 qui est schématisé par un arbre d'entraînement commun 12 pour la pompe de gavage 3, la machine volumétrique 11 et la pompe 1.

Naturellement d'autres dispositions sont possibles.

La machine volumétrique 11 présente des vitesses linéaires (ou tangentielles) plus faibles que celles de la pompe à surveiller 1 de manière à fonctionner en dehors du régime de cavitation lorsque la pression de gavage critique est atteinte ou sur le point d'être atteinte dans la pompe à surveiller.

La machine volumétrique 11 débite sur un venturi à cavitation 13, débitant lui-même sur un niveau de pression $P_3$ très faible par rapport à la pression $P_1$ d'alimentation de la pompe 1, par exemple sur la sortie 14 de l'inducteur de la pompe de gavage 3.

Un détecteur 15 de pressions différentielles détecte la différence de pression entre la pression d'alimentation $P_1$ de la pompe 1, et la pression $P_2$ à l'entrée du convergent du venturi 13, dans la section de conduite 9.

Le fonctionnement du dispositif est le suivant :

Tant qu'il n'y a pas vaporisation au col du venturi 13, le rendement du venturi 13 est proche de 1, et la pression $P_2$ est inférieure à la pression $P_1$, du fait que la pression $P_3$ est très faible devant la pression $P_1$ ; la machine volumétrique 11 travaille en moteur.

Lorsque la vaporisation du fluide est atteinte au col du venturi 13, le débit volumétrique du venturi devient maximum et proportionnel à $[(P_2 - Pv)/\rho]^{1/2}$ où Pv est la tension de vapeur du fluide et $\rho$ sa masse spécifique.

Dans ces conditions où le débit du venturi n'est plus capable de faire passer le débit de la pompe 11 la pression $P_2$ doit donc augmenter également. C'est ce qui se passe du fait que la machine volumétrique 11 travaille alors en pompe.

Par un choix judicieux des paramètres de construction (cylindrée de la machine volumétrique et section du col du venturi) il est possible d'atteindre $P_2$ = pression de gavage critique lorsque le seuil de gavage de la pompe à étudier est atteint.

En effet, considérant que le débit transvasé par la machine volumétrique 11 proportionnel à la vitesse angulaire N d'entraînement de la pompe volumétrique 1, doit traverser le venturi en régime de cavitation, on obtient :

$$K_1 N = K_2 [(P_2 - Pv)/\rho]^{1/2}$$

où $K_1$ est un facteur de proportionnalité dépendant des caractéristiques de la machine volumétrique 11 (sa cylindrée), et $K_2$ un facteur de proportionnalité dépendant des caractéristiques du venturi 13 (sa section de col).

L'équation précédente conduit à :

$$P_2 = Pv + K_3\rho N^2$$

où $K_3 = (K_1/K_2)^2$.

Or, on sait que la pression de gavage critique pour éviter le phénomène de cavitation dans la pompe volumétrique 1 est de la forme :

$$Pc = Pv + K\rho N^2$$

où K est un coefficient propre à la technologie de la pompe volumétrique 1.

Par conséquent, en choisissant les caractéristiques de la machine volumétrique 11 et du venturi 13 de sorte que $K_3 = K$, on est assuré que si $P_2$ est inférieur à $P_1$, $P_1$ est supérieur à la pression du gavage critique et la pompe à surveiller travaille en dehors du risque de cavitation. Si au contraire $P_2$ est supérieur à $P_1$, la pompe 1 fonctionne en cavitation.

Naturellement, si la cavitation n'est pas atteinte au col du venturi, la pression $P_2$ est plus petite que $P_1$, et la cavitation de la pompe à surveiller n'est pas à craindre.

Le régime de cavitation détecté peut être rendu variable en utilisant un venturi à section du col réglable par une aiguille.

Ainsi, la surveillance de la différence de pression $P_1$—$P_2$ donnée par le détecteur 15 permet de connaître la marge de fonctionnement hors cavitation, cette détection pouvant être utilisée à titre d'alarme, (permettant par exemple sur un avion supersonique de commuter l'alimentation en carburant venant d'un réservoir plus chaud, à un réservoir où le carburant est encore relativement froid), ou comme paramètre de régulation permettant de rétablir une pression de gavage suffisante.

Il apparaît clairement que l'un des avantages de l'invention est de donner une indication de la garde à la cavitation qui tienne compte à tout instant des caractéristiques réelles du fluide.

Son application est particulièrement intéressante dans les systèmes d'alimentation en carburant sur, par exemple, les turbomachines ou turboréacteurs aéronautiques, notamment du fait que ceux-ci sont alimentés par un carburant de nature pouvant varier d'un aérodrome de décollage à l'autre, et/ou surtout du fait que la température du carburant peut varier avec les conditions de vol (notamment le temps), pour des avions supersoniques par exemple.

**Revendications**

1. Dispositif de détection de la garde à la cavitation d'une pompe volumétrique à surveiller, comprenant, sur l'alimentation (2) en pression $P_1$ de la pompe volumétrique (1), une dérivation (8, 9, 10) comportant un venturi caractérisé en ce que ledit venturi est du type à cavitation (13) débitant sur un niveau de pression $P_3$ faible, et est associé à un générateur (11) de débit proportionnel au débit de la pompe volumétrique (1), les caractéristiques du générateur de débit (11) et du venturi (13) étant prédéterminées en fonction des caractéristiques de la pompe volumétrique (1) pour que le venturi (13) atteigne son régime de cavitation avant la cavitation de la pompe volumétrique (1) et que, à ce régime, la pression $P_2$ à l'entrée du convergent du venturi (13) soit égale à la pression Pc de gavage critique de la pompe volumétrique (1), le dispositif (7) comportant en outre un moyen (15) détecteur de la différence entre la pression $P_1$ d'alimentation de la pompe volumétrique et la pression $P_2$ d'entrée du venturi.

2. Dispositif selon la revendication 1, caractérisé en ce que le générateur de débit est une machine volumétrique (11) entraînée de façon proportionnelle à l'entraînement N de la pompe volumétrique.

3. Dispositif selon l'une des revendications 1 ou 2, caractérisé en ce que la pompe volumétrique (1) est alimentée par une pompe de gavage (3) et en ce que le venturi (13) débite sur la sortie de l'inducteur (14) de ladite pompe de gavage.

4. Dispositif selon l'une quelconque des revendications 1 à 3, caractérisé en ce que le venturi (13) est à col de section réglable.

5. Procédé de détection de la garde à la cavitation d'une pompe volumétrique à surveiller, caractérisé en ce qu'on dérive de l'alimentation (2) de la pompe volumétrique (1) un débit proportionnel au débit de ladite pompe (1) sur un venturi (13) à cavitation débitant sur un niveau de pression $P_3$ faible, en réglant ledit débit proportionnel et la cavitation du venturi (13) pour que celui-ci atteigne son régime de cavitation avant la cavitation de la pompe volumétrique (1) et que, à ce régime, la pression $P_3$ à l'entrée du convergent du venturi (13) soit égale à la pression de gavage critique Pc de la pompe volumétrique (1), et en ce qu'on détecte la différence entre la pression d'alimentation $P_1$ de la pompe volumétrique (1) et la pression $P_2$ d'entrée du venturi (13).

## Claims

1. Device for detecting the onset of cavitation in a volumetric pump to be monitored, comprising, at the inlet (2) at pressure $P_1$ of the volumetric pump (1), a branch (8, 9, 10) comprising a venturi characterized in this that the said venturi is of the cavitation type (13) discharging at a low pressure level $P_3$ and is associated with a generator (11) for discharging at a proportion of the output of the volumetric pump (1), the characteristics of the discharge generator (11) and of the venturi (13) being predetermined as a function of the characteristics of the volumetric pump (1) in order that the venturi (13) reaches its cavitation rating before cavitation in the volumetric pump (1) and that, at this rating, the pressure $P_2$ at the inlet of the convergent portion of the venturi (13) will be equal to the pressure Pc of critical forcing of the volumetric pump (1), the device (7) comprising furthermore means (15) for detecting the difference between the pressure $P_1$ of the supply to the volumetric pump and the pressure $P_2$ to the inlet to the venturi.

2. Device according to claim 1, characterized in this that the flow generator is a volumetric machine (11) driven in a proportional manner to the drive N of the volumetric pump.

3. Device according to one of claims 1 or 2, characterized in this that the volumetric pump (1) is supplied by a force pump (3) and in that the venturi (13) discharges into the outlet of the inductor (14) of the said force pump.

4. Device according to one of claims 1 to 3, characterized in that the venturi (13) has a throat of controllable section.

5. Method for the detection of the onset of cavitation of a volumetric pump to be monitored, characterized in that there is derived from the supply (2) of the volumetric pump (1) a flow proportional to the flow of the said pump at a cavitation venturi (13) discharging to a low pressure zone $P_3$ while controlling the said proportional flow and the cavitation of the venturi (13) in order that the latter should reach its cavitation rating before the cavitation of the volumetric pump (1) and that, at this rating, the pressure $P_3$ at the entry of the convergent portion of venturi (13) should be equal to the critical forcing pressure Pc of the volumetric pump (1), and that the difference in pressure between the supply pressure $P_1$ of the volumetric pump (1) and the pressure $P_2$ of inlet to the venturi (13) is detected.

## Patentansprüche

1. Vorrichtung zur Bestimmung des Kavitationsschutzes einer zu überwachenden Verdrängerpumpe, mit einer ein Venturirohr enthaltenden Abzweigung (8, 9, 10) an der Zuleitung (2), welche die Verdrängerpumpe (1) mit einem Druck P1 speist, dadurch gekennzeichnet, daß das betreffende Venturirohr von der Art eines Kavitationsrohrs (13) ist, das auf niedrigem Druckpegel P3 fördert und einem Generator (11) zugeordnet ist, dessen Fördermenge der Fördermenge der Verdrängerpumpe (1) proportional ist, daß die Charakteristiken des Fördermengen-Generators (11) und des Venturirohres (13) abhängig von den Charakteristiken der Verdrängerpumpe (1) derart festgelegt sind, daß das Venturirohr (13) seinen Kavitations-Betriebszustand vor der Kavitation der Verdrängerpumpe (1) erreicht, und daß bei diesem Betriebszustand der Druck P2 am konvergenten Eintrit des Venturirohres (13) gleich dem kristischen Stopfdruck (Pc) der Verdrängerpumpe (1) ist, und daß die Vorrichtung (7) außerdem eine Detektoreinrichtung (15) enthält, welche die Differenz zwischen dem Speisedruck P1 der Verdrängerpumpe (1) und dem Eintrittsdruck P2 des Venturirohres (13) ermittelt.

2. Vorrichtung nach Anspruch 1, dadurch gekennzeichnet, daß der Fördermengen-Generator eine Verdrängermaschine (11) ist, die proportional zum Antrieb N der Verdrängerpumpe angetrieben ist.

3. Vorrichtung nach einem der Ansprüche 1 oder 2, dadurch gekennzeichnet, daß die Verdrängerpumpe (1) mittels einer Stopfpumpe (3) gespeist ist und daß das Venturirohr (13) über den Ausgang des Induktors (14) der Stopfpumpe fördert.

4. Vorrichtung nach einem der Ansprüche 1 bis 3, dadurch gekennzeichnet, daß das Venturirohr (13) einen Halsabschnitt mit einstellbarem Querschnitt aufweist.

5. Verfahren zur Bestimmung des Kavitationsschutzes einer zu überwachenden Verdrängerpumpe, dadurch gekennzeichnet, daß von der Speisung (2) der Verdrängerpumpe (1) eine der Fördermenge dieser Pumpe (1) proportionale Fördermenge mittels eines Kavitations-Venturirohres (13) abgezweigt wird, das auf niedrigem Druckpegel P3 fördert, wobei diese proportionale Fördermenge und die Kavitation des Venturirohres (13) derart gesteuert werden, daß dieses seinen Kavitations-Betriebszustand vor der Kavitation der Verdrängerpumpe (1) erreicht, wobei bei diesem Betriebszustand der Druck P3 am konvergierenden Eintritt des Venturirohres (13) gleich dem kritischen Stopfdruck Pc der Verdrängerpumpe (1) ist, und daß die Differenz zwischen dem Speisedruck P1 der Verdrängerpumpe (1) und dem Druck P2 am Eintritt des Venturirohres (13) ermittelt wird.